# EUROPEAN PATENT APPLICATION

(11) **EP 3 889 049 A1**
(43) Date of publication of application: **06.10.2021**
(21) Application number: 21166024.6
(22) Date of filing: 30.03.2021
(51) Int. Cl.: B64D 39/00

(54) **DROGUE ASSEMBLY FOR AIR-TO-AIR ENGAGEMENT USING A LIDAR SYSTEM**

(30) Priority: 30.03.2020 GB 202004596
(71) Applicant: COBHAM MISSION SYSTEMS WIMBORNE LIMITED, Wimborne Dorset BH21 2BJ (GB)
(72) Inventor: CAMPBELL, Andrew, WIMBOURNE, BH21 2BJ (GB); BOLT, David, WIMBOURNE, BH21 2BJ (GB); WITHWORTH, Samuel, WIMBOURNE, BH21 2BJ (GB)
(74) Representative: CSY Herts

(57) **Abstract**

The present invention relates primarily to the field of air-to-air refuelling of aircraft using an engagement between a tanker (or donor) aircraft and a receiver aircraft so that fuel may be delivered to the receiver aircraft via a fuelling conduit, such as a hose or boom. The invention may also find application in other air-to-air engagement activities, such as recharging of an electric powered aircraft by delivery of an electrical recharging current to batteries of the aircraft via an electrical cable. In accordance with one aspect of the invention there is provided a drogue assembly for towing behind a donor aircraft, which drogue assembly comprises a reception coupling for engaging with a probe provided on a receiver aircraft and a drogue chute for stabilising the reception coupling when towed, wherein the drogue assembly further comprises at least one LiDAR sensor, a controller for the LiDAR and a data processor in data communication with the LiDAR for processing the sensed LiDAR data. The drogue assembly preferably includes an electrical energy storage device for powering one or more of: the LiDAR sensor, the controller and/or the data processor.

## Description

The present invention relates primarily to the field of air-to-air refuelling of aircraft using an engagement between a tanker (or donor) aircraft and a receiver aircraft so that fuel may be delivered to the receiver aircraft via a fuelling conduit, such as a hose or boom. The invention may also find application in other air-to-air engagement activities, such as recharging of an electric powered aircraft by delivery of an electrical recharging current to batteries of the aircraft via an electrical cable. The invention may also be useful in the re-supplying of receiver aircraft more generally in which fluids are delivered from a donor aircraft to a receiver aircraft. These could be liquid fuels, fluidized solids, foodstuffs, water, gases. Another potential application is in the retrieval by a mother aircraft of a tender aircraft, such as a drone, by use of a drogue and probe arrangement. Other applications may well be contemplated by the reader when the invention as described hereinafter is understood.

There are two forms of aerial refuelling in widespread use; one method involves the use of a telescoping boom fixed to the underside of a tanker aircraft. The distal end of the boom is typically provided with moveable control surfaces in the form of a pair of ruddervators which allow a boom operator in the tanker aircraft to 'fly' the boom end into engagement with a receptor in the receiving aircraft. The other method is the probe and drogue system in which the tanker aircraft reels out a trailing flexible fuel hose with a drogue assembly attached to the free end. The receiver aircraft typically has an elongate forward pointing fuelling probe which the pilot of the receiving aircraft directs into engagement with a reception coupling in the drogue assembly. The drogue assembly includes a generally cone-shaped stabilisation device comprising a canopy attached to a rear end of the reception coupling. The reception coupling is adapted to receive and latch with the probe on the receiver aircraft. The probe includes a core through which fuel is conveyed to a fuel tank in the receiver aircraft.

The tanker aircraft feeds out and trails the hose and drogue assembly during flight, whilst the receiver aircraft is piloted towards the drogue assembly. The receiver aircraft pilot relies purely on skill and experience to control coupling of the probe. The freely-trailing drogue assembly can easily be buffeted in the airflow, making the task more difficult. Typically, control of the drogue assembly is achieved, to a limited extent, by adjusting any slack in the hose. The tanker aircraft pilot usually has no control over the instantaneous coupling position of the drogue assembly itself.

Various aids to the engagement of drogue and probe have been proposed. US2019/0272660A1 discloses a system in which a LiDAR (light detection and ranging) unit is located in the receiver aircraft and is said to be capable of establishing the drogue and probe positions so that their relative spatial dispositions can be calculated, and engagement is facilitated. US2018/0016026A1 discloses a similar system in which a data processing system is used to calculate a trajectory for the receiver aircraft to follow to achieve engagement. US6604711 proposes a refuelling system in which an optical cable is fed from the donor aircraft, along the fuel hose to the drogue. The optical cable feeds back to a LiDAR sensor in a controller unit in the aircraft. Transverse thrusters are provided on the drogue to shift it to a target position. US9933521 discloses a boom and receptor refuelling system in which the donor aircraft is provided with a LiDAR system in which a conical field behind the aircraft is laser scanned. A receiver aircraft is equipped with reflectors encoded with aircraft identification information, so that when the aircraft enters the conical field the reflectors can be read by the scanner and the aircraft identified.

The present invention seeks to provide a probe and drogue air-to-air engagement system which permits the automation, or semi automation, of the engagement process so as to relieve the pilot from manual guidance of the probe to engagement with a drogue assembly. The invention also seeks to provide a drogue assembly which can actively sense the presence of a receiver aircraft. This should preferably be useable on a wide range of tanker or donor aircraft without having to fit-out the donor or receiver aircraft with associated systems.

In accordance with one aspect of the invention there is provided a drogue assembly for towing behind a donor aircraft, which drogue assembly comprises a reception coupling for engaging with a probe provided on a receiver aircraft and a drogue chute for stabilising the reception coupling when towed, wherein the drogue assembly further comprises at least one LiDAR sensor, a controller for the LiDAR and a data processor in data communication with the LiDAR for processing the sensed LiDAR data.

The drogue assembly preferably includes an electrical energy storage device for powering one or more of: the LiDAR sensor, the controller and/or the data processor. The energy storage device could be an electrochemical cell, a battery of cells or on or more capacitors.

The drogue assembly may comprise an energy converter adapted to convert kinetic energy of airflow over the drogue into electrical energy. This converter may be a turbine and electrical generator, so that generated electrical energy charges the energy storage device. The convertor may comprise a turbine and electrical generator driven by the turbine. The turbine preferably comprises a fan of radial turbine blades (two or more blades) that are adapted to rotate in the airflow so as to drive the generator.

The LiDAR is preferably configured and arranged to scan a field behind the drogue assembly. The LiDAR and data processor may be adapted to generate a dot map image of one or more objects in the field of scanning. So the data processor may comprise image recognition functionality for locating and tracking an aircraft, or part of an aircraft, in the field.

The data processor may comprise image recognition functionality for locating and tracking the probe of the receiver aircraft. The data processing system may be adapted to calculate a position offset of the receiver aircraft's probe with respect to a reference point. The reference point may be the drogue, or a portion of the drogue or especially the drogue reception coupling, or in particular an entrance of the reception coupling with which the probe is to be aligned for engagement therewith.

The drogue assembly is preferably provided with a drogue assembly shifting system for displacing the drogue assembly transversely with respect to the towing axis of the drogue assembly. The drogue assembly shifting system may comprise one or more aerodynamic aids which are selectively actuatable to cause a net force to act on the drogue assembly in the displacement direction. The data processing system may be adapted to use the position offset to calculate a corrective transverse displacement direction. The data processing system may be adapted to apply the corrective transverse displacement direction to the drogue assembly shifting system so as to steer the drogue assembly towards alignment with the probe. The data processing system is adapted to conduct an iterative series of position offset calculations and corrective transverse displacement applications so as to cause the drogue assembly to approach alignment with the probe, and preferably to cause the reception coupling to approach the probe for engagement and latching therewith.

The LiDAR and data processor are adapted to provide transverse (X, Y axes) and distance (Z axis) information for the dots. From this, corrective X-Y shifting of the drogue towards the drogue assembly and its reception coupling may be invoked. The distance information may be communicated to the receiver aircraft or the tanker aircraft. This may be used to inform the aircrew as to the progress of engagement, or to allow corrective control inputs to be made to manually shift the drogue assembly remotely.

Following is a description by way of example only and with reference to the figures of the drawings of one mode for putting the present invention into effect.
Figure 1 is a schematic side view of a drogue assembly in accordance with the present invention, shown in advance of the nose of a receiver aircraft.
Figure 2 is a two dimensional representation of a dot map image of the receiver aircraft in a LiDAR field behind the drogue of the invention.
Figure 3 is a flow chart of the processes carried out by the data processing system used in operating the drogue of the invention.

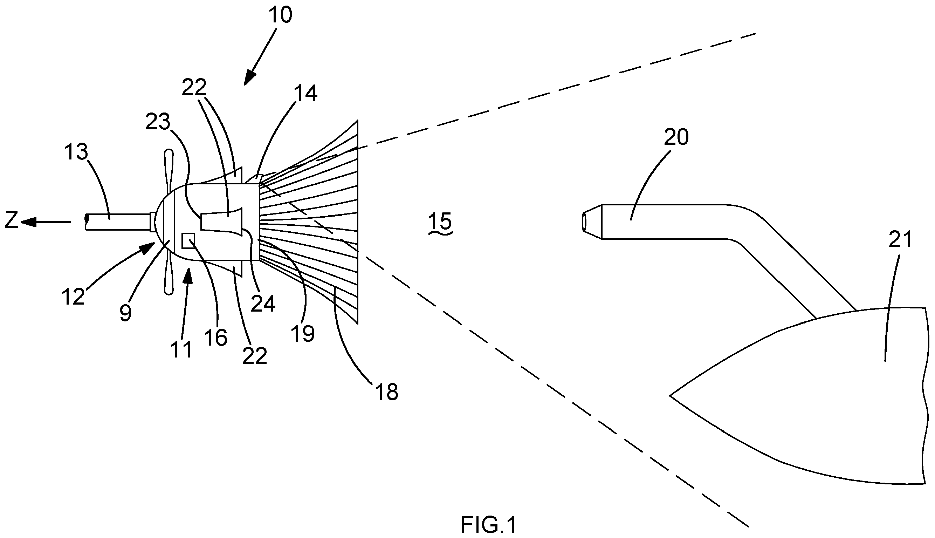

In figure 1 a drogue assembly in accordance with the present invention is shown as 10. The drogue assembly comprises a body portion 11 which has a (convex) curved conical form. A twin-bladed turbine generator unit 9 is accommodated in a front region of the body portion, and co-axially located. The body potion has a nose region 12 at the apex of the cone. A coaxially attached refuelling hose 13 is attached to the apex of the cone. The hose 13 leads to a tanker aircraft (not shown, but in direction Z). The nose region is provided with a bore (not shown) through which to deliver fuel from the hose through the body portion. An inner region of the body portion is configured as a probe reception coupling (not shown), such couplings being well known in the art. For example US9,950,804 (Mouskis) discloses a suitable reception coupling. Others are of course known in the art and may be used instead. The reception coupling is adapted to engage with the probe 20 of a receiver aircraft 21 (nose portion only shown). The reception coupling latches with the incoming probe and provides fluid communication between the fuel hose 13 and the probe. In this way fuel can be transferred along the hose from a tanker aircraft, via the reception coupling to the probe (which feeds a fuel tank of the receiver aircraft 21).

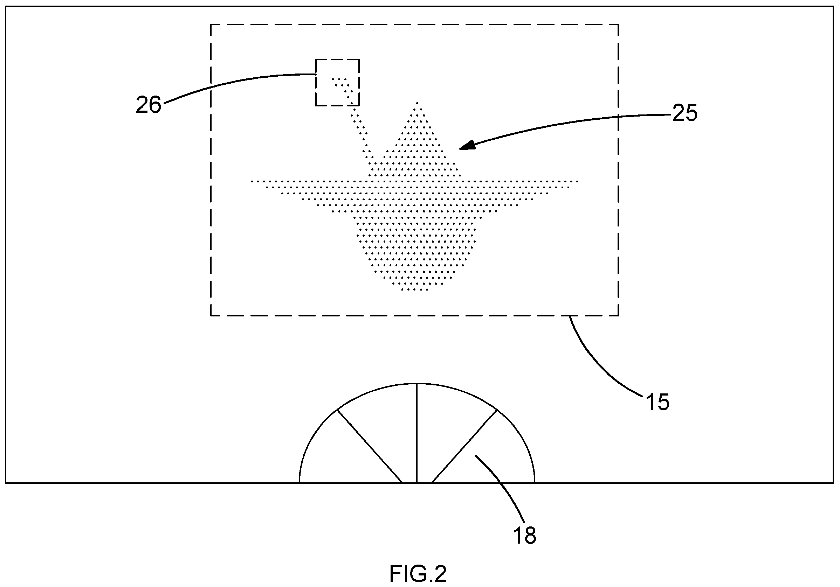

A rear end region of the body portion is provided with a rear facing LiDAR laser projector 14. The LiDAR is adapted to scan within a rectangular pyramidal detection field 15 behind the drogue, as shown by the dashed lines in Figure 1 and the outer dashed lines in Figure 2. There may be a single LiDAR transmitter and receiver pair, or an array of multiple sensors. A generally frusto-conical chute canopy 18 of conventional configuration is attached to a rear rim region 19 of the drogue body portion. The chute provides drag which aerodynamic stability and maintains a tension in the hose which facilitates controlled uncoiling to deploy the hose from the tanker aircraft, and stable winching-in to the tanker aircraft of the hose after use.

The body portion of the drogue assembly has an internal compartment 16 for accommodating microprocessor circuitry and a battery device. Also present are four steering flaps 22 (three of four are visible in Figure 1) which are circumferentially spaced apart around a waist region of the drogue body portion. The flaps each have a generally wedge-shaped form, with a slightly concave outer (hypotenuse) surface. An underside of each flap is attached to an associated linear actuator (not shown). A leading edge 23 of each flap is pivotably attached to the waist region surface. The trailing edge region 24 of each flap may swing out about the leading edge pivot. Thus each flap may be selectively actuated so as to be deployed into the airstream when the drogue assembly is being towed. The deployed flap 22 locally increases drag, causing a reaction in the drogue which shifts the drogue laterally in the X-Y plane depending upon the orientation of the body portion and which flap is activated. (Strictly speaking the X-Y 'plane' is spherical, but with a very large radius compared to the lateral movement). The flaps may be deployed in adjacent pairs to provide diagonal shifting, or individually to provide orthogonal shifting and travel.

In use, the LiDAR transmitter sends flashes of light in a field 'cone' 15 extending rearwards of the drogue. The laser will scan in a raster across the field 15. Upon the light hitting an object (e.g. the receiver aircraft), some of the light will be reflected back towards the LiDAR receiver/sensor. The microprocessor can determine the range of the surface that the light reflected off by logging the time taken for the light dot to travel out and return. The processors can thus, during a complete scan cycle, build-up plot a three dimensional point cloud by combining thousands of these reflections. Thus a live image of the environment around the trailing components is built up. So, in use the LiDAR sensor 14 builds-up a dot map image 25 of the receiver aircraft, as shown in figure 2. The microprocessor's software is programmed to recognise an aircraft shape, and can also resolve and detect a refuelling probe (as indicated by the inset dashed square 26 in figure 2). The microprocessor may include probe position information for specific aircraft, to help derive the probe position. In this way the incoming receiver aircraft 21 can be tracked, as can the probe, in the X-Y plane, and along the Z direction (distance away from the drogue).

Object detection software recognises the 3D image of the receiver aircraft and will locate the probe. The sensors are capable of detecting the probe/aircraft with no dependency on time of day or weather conditions. Software will process the data from the sensors and identify the probe/aircraft, simultaneously calculate distance from the drogue. This information can be transmitted by an on-board RF transmitter to the tanker or receiver aircraft. The control flaps can be manually or automatically operated to steer the drogue towards the aircraft's probe in response position information from the LiDAR. The dot map image may be used to facilitate the manual guidance of the drogue by control flap actuation, and may be of particular use at night.

A preferred version of the invention does away with the need to communicate to the tanker or receiver aircraft. In this version the data processing unit in the drogue body portion is programmed and configured to automatically guide the drogue towards the probe, and ultimately into engagement with the reception coupling. In this preferred aspect of the invention the microprocessor system is programmed to guide the drogue autonomously by sending actuation signals to the flap actuators. An initial step comprises the drogue assembly autonomously guiding itself towards the aircraft, and then as the aircraft comes close, switching to a mode in which the drogue is autonomously guided towards the expected position of the probe free end. As the drogue assembly approaches closer to the probe, sufficient dot resolution may permit the probe to be resolved so as to guide the reception coupling entrance in the rear portion of the drogue assembly to the probe.

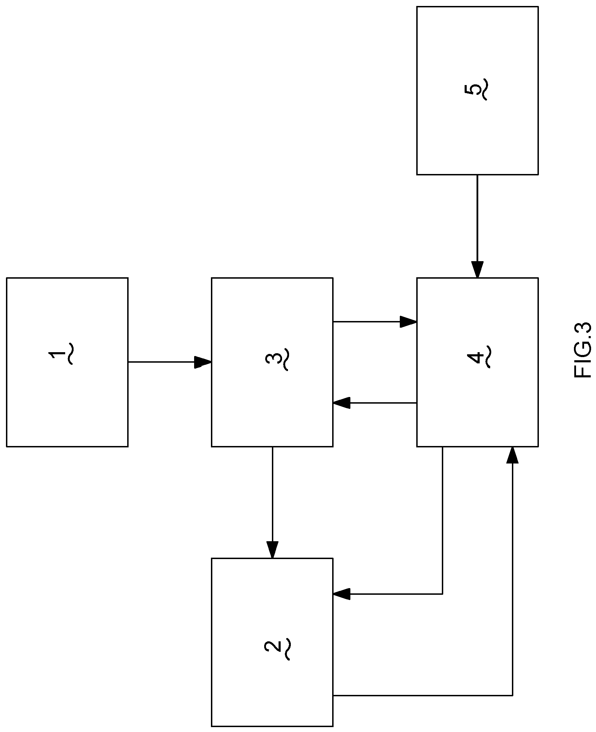

Figure 3 is a chart which represents schematically the components of the automated guidance system for sensing the position of a receiver aircraft and its probe relative to a refuelling drogue assembly. There is turbine device 1 for harvesting energy from the passing airflow (see item 9 in figure 1). This is installed so as to use airflow to generate electricity which feeds a battery unit 3 for storing the harvested electrical charge, and powering the other components integrated into the drogue assembly. The battery provides a stable power supply to the linear actuators which serve as the flap actuation mechanism 2 for the control flaps (22 in figure 1). There is a data processing unit 4 which is also powered by the battery. The LiDAR sensor 5 is integrated into the rear end of the drogue body portion. This is positioned and directed to be able to scan a field backwards towards where a receiver aircraft would approach. The microprocessor 4 received signals from the LiDAR receiver that allows it to build a 3D point cloud image from the received data (and with the known transmitted signal data and raster timing). This point cloud image is analysed to determine how far away a receiver aircraft is from a datum point, such as the drogue body portion. It can also establish the spatial relationship of the probe with respect to the receiver aircraft. Based on this analysis an appropriate control flap (or flaps) is actuated so as to shift the drogue towards the probe. A feedback loop establishes whether the shifting response is appropriate and, if not, corrective control flap action can be taken. The drogue in this way gradually converges with the probe, so that the reception coupling latches onto the probe free end as it enters the aligned reception coupling. The pilot will of course still be involved in the docking process by gradually closing on the drogue along the Z-direction and generally maintaining steady alignment.

In the aforementioned autonomous embodiment, the entire system is confined within the drogue body portion. The use of batteries (and/or an optional turbine generator) means that there is no need for external power sources (such as from the tanker aircraft via the power cabling along the hose). There is no need for communication to the tanker and no communication with the receiver aircraft. The probe and drogue docking is automatic, and avoids the need for equipment to be added to the tanker aircraft or to the receiver aircraft. So the present inventors have with the present invention removed the need for a probe and drogue refuelling system to have guidance components integrated into the tanker or receiver aircraft. This avoids the need for expensive certification of modifications and allows the system to be retrofitted to existing fleets of tankers simply by replacing the drogue assembly.

## Claims

1. A drogue assembly for towing behind a donor aircraft, which drogue assembly comprises a reception coupling for engaging with a probe provided on a receiver aircraft and a drogue chute for stabilising the drogue when towed, wherein the drogue assembly further comprises at least one LiDAR sensor, a controller for the LiDAR and a data processor in data communication with the LiDAR for processing the LiDAR data.

2. A drogue assembly as claimed in claim 1 comprising an electrical energy storage device for powering LiDAR sensor, controller and data processor, such as a cell, battery or capacitor.

3. A drogue assembly as claimed in claim 2 comprising an energy converter adapted to convert kinetic energy of airflow over the drogue into electrical energy, such as a turbine and electrical generator, and wherein the electrical energy charges the energy storage device.

4. A drogue assembly as claimed in any of the preceding claims wherein the LiDAR is configured and arranged to scan a field behind the drogue.

5. A drogue assembly as claimed in claim 4 wherein the LiDAR is adapted to generate a dot map image of an object, or part of an object, in the field of scanning.

6. A drogue assembly as claimed claim 5 wherein the LiDAR and data processor are adapted to provide transverse (X, Y axis) and distance (Z axis) information for the dots.

7. A drogue assembly as claimed in claim 5 or 6 wherein the data processor comprises image recognition functionality for locating and tracking an aircraft, or part of an aircraft, in the field.

8. A drogue assembly as claimed in any one of claims 5, 6 or 7 wherein the data processing system is adapted to calculate a position offset of a probe of the receiver aircraft with respect to a reference point.

9. A drogue assembly as claimed in claim 8 wherein the reference point is the drogue assembly, or a portion of the drogue assembly, or especially the drogue reception coupling, or in particular an entrance of the reception coupling.

10. A drogue assembly as claimed in any preceding claim wherein a drogue shifting system is provided for displacing the drogue assembly transversely in an X and/or Y direction with respect the towing Z axis of the drogue.

11. A drogue assembly as claimed in claim 10 wherein the drogue shifting system comprises one or more aerodynamic aids which are selectively deployable to cause a net force to act on the drogue assembly in the displacement direction.

12. A drogue assembly as claimed in claim 10 or 11 when dependent from claim 10 wherein the data processing system is adapted to use the offset to calculate a corrective transverse displacement direction.

13. A drogue assembly as claimed in claim 12 wherein the data processing system is adapted to apply the corrective transverse displacement direction to the drogue shifting system so as to steer the drogue assembly towards alignment with the probe.

14. A drogue assembly as claimed in claim 13 wherein the data processing system is adapted to conduct an iterative series of position offset calculations and corrective transverse displacement applications so as to cause the drogue assembly to approach the probe.

15. A drogue assembly as claimed in claim 13 or 14 wherein the data processing system is adapted to cause the reception coupling of the drogue assembly to approach the probe for engagement and latching therewith.
